# EUROPEAN PATENT SPECIFICATION

(11) **EP 0 799 276 B1**
(45) Date of publication and mention of the grant of the patent: **16.02.2000**
(21) Application number: 95942952.3
(22) Date of filing: 30.11.1995
(51) Int. Cl.: C08K 3/10, C08K 3/26, C08K 5/04, C01F 7/00

(54) **HALOGEN SCAVENGER FOR POLYMERS AND COPOLYMERS**
HALOGENFÄNGER FÜR POLYMERE UND COPOLYMERE
CAPTEUR D'HALOGENE POUR POLYMERES ET COPOLYMERES

(30) Priority: 22.12.1994 US 362336
(43) Date of publication of application: 08.10.1997
(73) Proprietor: REHEIS, INC., Berkeley Heights New Jersey 07922 (US)
(72) Inventor: PAREKH, Jawahar, C., Livingston, NJ 07039 (US); DESAI, Rajanikant, D., Andover, NJ 07821 (US)
(74) Representative: Caldwell, Judith Margaret
(86) International application number: US9515589
(87) International publication number: WO9619529

(56) References cited:
- EP-A- 0 282 619
- EP-A- 0 301 509
- WO-A-92/20619
- WO-A-93/22237
- US-A- 4 379 882
- US-A- 4 539 195
- US-A- 4 675 356
- US-A- 5 169 967
- CAVANI F ET AL: "HYDROTALCITE-TYPE ANIONIC CLAYS: PREPARATION, PROPERTIES AND APPLICATIONS" CATALYSIS TODAY, vol. 11, 1 January 1991, pages 173-291, XP000537043

## Description

The invention relates to hydrotalcite-like compositions useful as halogen scavengers in polymer formulations, and more specifically pertains to aluminum magnesium hydroxy carbonate solid solutions which may be compounded with plastics to neutralize residual catalyst.

### Background of the Invention

Many synthetic polymers are prepared by catalyzed polymerization of monomers. Generally, the catalyst, or residue thereof, remains in the final product. Removal of the catalyst, which may be present at levels as low as ten parts per million, is commercially impractical. However, leaving the catalyst in the polymer, even at such low concentrations, often causes problems.

The catalysts used to polymerize olefinic monomers are typically halogen-containing metallic or organometallic compounds, e.g., Ziegler-Natta catalysts containing titanium tetrachloride. It is reported that residual titanium chloride species in the polymers interfere with the functioning of stabilizers, e.g., antioxidants, that are typically compounded with the polymer. Residual catalyst may also catalyze polymer degradation reactions, and, particularly with halogen-containing catalyst residue, the halogens can promote corrosion of the equipment used to compound and process the polymer.

It is commonly observed that polymers which have been compounded with thermal, and particularly light, stabilizers may exhibit a discoloration, i.e., they can develop a yellow or pinkish coloration. This has been attributed to the action of residual catalyst, and particularly halide ions, reacting with the stabilizers that have a phenol or a quinone functional group. The halide may react with the phenol group to generate a colored phenolate anion.

Most residual catalyst is acidic. Thus, one approach to overcoming the problems associated with residual catalyst is to add a basic material to the polymer, to thereby neutralize the residual catalyst. Such basic materials are known in the art, and are commonly referred to as neutralizer compounds or halogen-scavenging compounds. One class of halogen-scavenging compound is hydrotalcite and hydrotalcite-like materials.

Hydrotalcite is the name given to a natural mineral having the chemical structure Al₂Mg₆OH₁₆(CO₃) · 4 H₂O, which may also be written as Al₂O₃ · 6 MgO · CO₃ · 12 H₂O. Natural hydrotalcite is an example of a basic magnesium alumino-carbonate hydrate. As obtained from the earth, natural hydrotalcite is generally contaminated with other minerals such as penninite and muscovite, as well as various heavy metals. The impurity levels in natural hydrotalcite, as well as its scare occurrence around the world, have limited its commercial use.

Pure, or nearly pure hydrotalcite has been prepared synthetically. For example, U.S. Patent No. 5,250,279 describes a method for the preparation of high purity synthetic hydrotalcite having a small platelet morphology. The method comprises reacting a mixture of a magnesium source, such as magnesium oxide, with an alkali metal bicarbonate, solid alumina trihydrate and an alkali metal aluminate under aqueous hydrothermal conditions at a temperature of about 160 - 200 °C. Other reports of the preparation of synthetic hydrotalcite having a composition which matches natural hydrotalcite may be found in, for example, U.S. Patent Nos. 3,650,704 and 3,539,306.

The term "hydrotalcite" is often used generically to refer to a large class of basic aluminum magnesium carbonate compounds or complexes having various lattice structures and compositions. These hydrotalcite-like materials, also referred to as hydrotalcite analogues, have been the subject of disclosed synthetic efforts.

U.S. Patent No. 4,284,762 (the '762 patent) discloses a hydrotalcite of the formula

Mg₁₋ₓAlₓ(OH)₂A_{x/n}ⁿ⁻ • mH₂O

wherein x is greater than 0 but less than or equal to 0.5, m is a positive number, and An- represents an anion having a valence of n, or a product resulting from the surface-coating of said hydrotalcite with an anionic surface-active agent. The hydrotalcite has a BET specific surface area of not more than 20 m²/g, and a crystallite size, in the <003> direction of at least 600 Å, and preferably at least 1,000 Å..

U.S. Patent No. 4,299,759 (the '759 patent) discloses a hydrotalcite of the same composition as set forth in the '762 patent, but having a BET specific surface area of not more than 30 m²/g. The '759 patent discloses that the surface treatment, i.e., the addition of sodium stearate to the hydrotalcite particle, can be achieved by adding an aqueous solution of sodium stearate to a suspension of the hydrotalcite powder to cause chemical adsorption of the surface-active agent to the surface of the solid powder. The surface treatment agent is preferably present at a loading of about 1 to about 10% by weight, based on the weight of the hydrotalcite.

U.S. Patent No. 4,560,545 is directed to a process for preparing a basic aluminum magnesium carbonate of the formula

Al₂•Mg₆ • (OH) ₁₄ • (CO₃) ₂•4H₂O.

The process comprises heating an aqueous slurry of aluminum hydroxide, magnesium hydroxide and either ammonia or a water-soluble organic nitrogen-containing base, in the presence of carbon dioxide and at a temperature of between 70 and 100 °C at atmospheric pressure. The reaction time is from 1 to 12 hours, and the carbon dioxide is bubbled through the slurry during this time. The basic aluminum magnesium carbonate so produced may be used in pharmaceutical compositions.

Hungarian Patent HU 30,453 (Abstract No. 101:43635g, prepared by the Chemical Abstracts Service) discloses a composition with the formula

Al₂•Mg₄•(OH)₁₂•(CO₃)•2H₂O.

The composition is prepared by the reaction of MgCl₂ with Na₂CO₃ and Na orthoaluminate or Al(OH)₃ in the presence of NaOH.

U.S. 4,539,195 claims a crystalline basic aluminum magnesium carbonate of the formula:

Al₂(Mg)₆(OH)₁₂(CO₃)₃ • x(H₂O)

in which x ≥ 4, obtainable by hydrothermal reaction of aluminum hydroxide with magnesium hydroxide or magnesium oxide in the presence of carbonate ions in stoichiometric amounts under the influence of gravitational forces at a temperature of 50 to 100°C.

A basic magnesium aluminum carbonate of the formula

Al₂O₃ • xMgO • yCO₂ • zH₂O

is described in British Patent 1,086,779, wherein x can be 0.15 to 1.5, y can be varied from 0.3 to 2.5, and z is not less than 2.5.

U.S. Patent No. 4,675,356 discloses a hydrotalcite solid solution represented by the following formula

[(M₁²⁺)_{y1}(M₂²⁻)_{y2}]₁₋ₓMₓ³⁺(OH)₂A_{x/n}ⁿ⁻ • mH₂O

wherein M₁²⁺ represents at least one divalent metal selected from the group consisting of Mg, Ca, Sr and Ba; M₂²⁺ represents at least one divalent metal cation selected from, the group consisting of Zn, Cd, Pb and Sn; M³⁺ represents a trivalent metal cation, Aⁿ⁻ represents an anion having a valency of n, and x, y1, y2 and m are positive numbers represented by the following expressions 0 < x ≤ 0.5, 0 < y1, 0 < y2, 0.5 ≤ y1+y2 < 1, and 0 ≤ m < 2; and to a resin composition comprising the above agent. The hydrotalcite of the '356 patent may be surface treated with, for example, anionic surface-active agents such as sodium stearate.

Reheis, Inc., Berkeley Heights, NJ, sells an aluminum magnesium hydroxy carbonate, trademark L55-R®, having an analysis of 14-18% aluminum oxide, 25-29% magnesium oxide, 15-19% sodium stearate and 8.5-13.5% carbon dioxide. L55-R® is a white, odorless powder having a bulk density of 0.19 - 0.35 g/cc and a particle size of 100% through 400 mesh (37 microns) and not less than 90% through 10 microns.

While the prior art describes several hydrotalcite and hydrotalcite-like materials, there remains a need in the art for materials which can be added to polymeric materials, and mitigate the problems associated with residual catalyst and other halide-generating mechanisms.

### Summary of the Invention

The present invention provides a solid solution having the formula Al₂(Mg)ₐ(OH)_{b}(CO₃)_{c}(G)_{d}·eH₂O wherein 3 ≤ a ≤ 5.5; 8 ≤ b ≤ 14; 1.2 ≤ c ≤ 3; 0 ≤ d ≤ 1; 1 ≤ e ≤ 10 and G is a surface active agent. The solid solution has a crystallite size in the <003> direction of about 190 Å to about 225 Å, and has bidentate coordination for carbonate ion as shown by an infrared spectrum. Preferably, the surface active agent is a metal salt of a C₁₀-C₂₂ saturated fatty acid, and more preferably is sodium stearate, zinc stearate or calcium stearate. In a preferred embodiment, the solid solution has the above formula wherein 4.1 ≤ a ≤ 5.3; 10 ≤ b ≤ 12; 1.3 ≤ c ≤ 3; 0.05 ≤ d ≤ 0.5; 3 ≤ e ≤ 9.

That the solid solution has bidentate coordination for the carbonate ion can be seen by a split absorption band in the region of 1415-1480 cm⁻¹. The solid solution preferably has a BET specific surface area of about 25 m²/g to about 40 m²/g. The solid solution may be present in an aqueous slurry, however is preferably a dry powder. The dry powder has a tap density of about 0.1 g/cc to about 0.3 g/cc.

The invention also provides for a method for inhibiting the corrosion-causing tendency and coloration of halogen-containing olefin polymers or copolymers. The method comprises incorporating about 0.01% to about 1% of the solid solution as described above into an olefin polymer or copolymer.

The solid solution, having surface active agent, may be formed by a process wherein an aqueous slurry comprising an aluminum compound, preferably basic aluminum carbonate gel and/or aluminum hydroxide, and a magnesium compound, preferably basic hydrated magnesium carbonate and/or magnesium oxide, wherein the molar ratio of magnesium to aluminum is about 1.5 to 2.75, is heated to a temperature of about 70 °C to about 95 °C and for a reaction time "X" to provide a first slurry, where "X" is a period of time sufficient to achieve removal of substantially all free and loosely bound carbon dioxide from the aqueous slurry. Then at least one surface active agent is added to the first slurry, to provide a second slurry. The second slurry is heated to a temperature of about 125 °C to about 140 °C for a time sufficient for a suspension test to be passed. The suspension test is described later herein.

When magnesium oxide is the magnesium compound in the above process, aluminum hydroxide is preferably the aluminum compound, and a stream of carbon dioxide gas is passed through the second slurry at a rate sufficient to produce a solid solution. When basic aluminum carbonate gel is the aluminum compound, it preferably has an Al₂O₃ content of about 2% to about 20% by weight. When magnesium carbonate is the magnesium compound, it preferably has a MgO content of about 40% to about 43.5% by weight.

The solid solution prepared as described above will be present as an aqueous slurry. To obtain a dry powder of the solid solution, the water may be removed from said second slurry, and the resulting material may be micronized to provide particles having a particle size distribution wherein at least 99% of the particles are less than 44 microns in diameter, and at least 95% of the particles are less than 10 microns in diameter.

The process need not be run in the presence of a surface active agent, in which case an aqueous slurry comprising an aluminum compound, preferably basic aluminum carbonate gel and/or aluminum hydroxide, and a magnesium compound, preferably basic hydrated magnesium carbonate and/or magnesium oxide, wherein the molar ratio of magnesium to aluminum is about 1.5 to 2.75, is heated to a temperature of about 70 °C to about 95 °C and for a reaction time "X" to provide a first slurry. The reaction time "X" is a period of time sufficient to achieve removal of substantially all free and loosely bound carbon dioxide from the aqueous slurry. The first slurry is then heated to a temperature of about 125 °C to about 140 °C for about 1 to about 4 hours.

The solid solutions formed by the above processes preferably have an IR spectrum which displays a split absorption band in the region of 1415-1480 cm⁻¹, and preferably have a crystallite size in the <003> direction of about 190 Å to about 225 Å.

### Brief Description of the Drawing

The foregoing summary, as well as the following detailed description of the preferred embodiments of the invention, will be better understood when read in conjunction with the appended drawing. In the drawing:

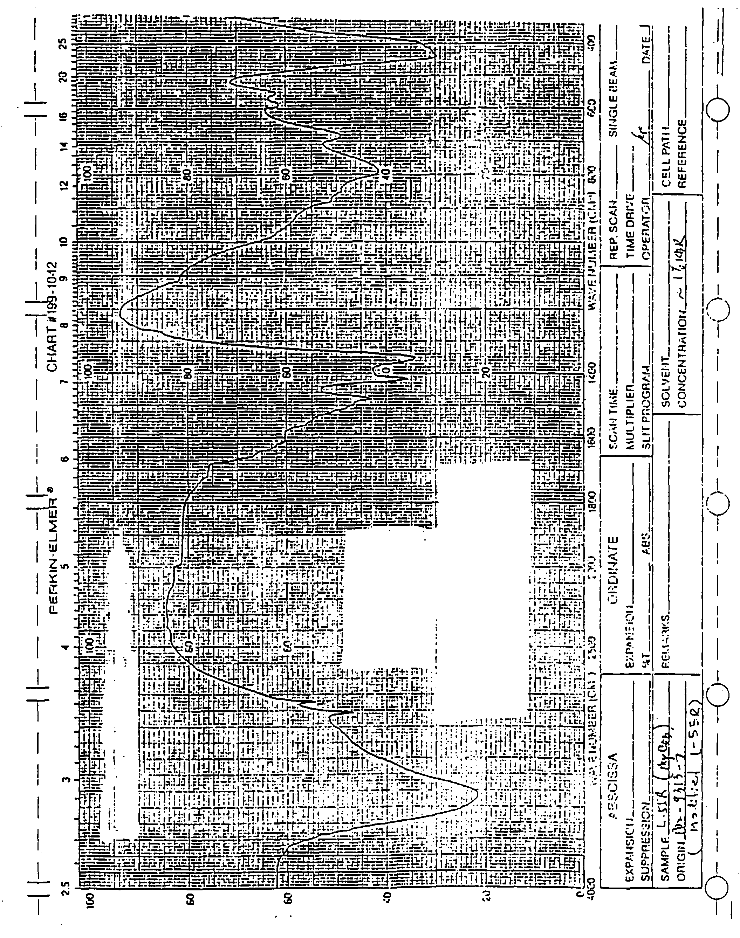

Fig. 1 is an infrared spectrum of a solid solution of the invention.

### Description of the Preferred Embodiments

As indicated above, this application is directed to a synthetic solid solution, and in particular to a synthetic basic magnesium aluminocarbonate hydrate. The solid solution of the invention has the formula
Al₂(Mg)ₐ(OH)_{b}(CO₃)_{c}(G)_{d}·eH₂O wherein G is at least one surface active agent, and wherein the solid solution displays bidentate coordination for the carbonate ions as shown by an infrared spectrum, and wherein 3 ≤ a ≤ 5.5, 8 ≤ b ≤ 14, 1.2 ≤ c ≤ 3, 0 ≤ d ≤ 1 and 1 ≤ e ≤ 10. Techniques to determine the compositional formula of hydrotalcite and hydrotalcite-analogues, such as the solid solution set forth above, are well-known in the art.

In a preferred embodiment, the hydrotalcite solid solution particles of the above formula comprise a surface-active agent. However, particularly in instances when the hydrotalcite is intended for use in aqueous coating compositions, or in antacids for pharmaceutical use, the surface active agent may not be present.

Specific examples of the surface active agent include, without limitation, sodium stearate, potassium behenate, sodium montanate, potassium stearate, sodium oleate, potassium oleate, sodium palmitate, potassium palmitate, sodium laurate, potassium laurate, sodium dilaurylbenzenesulfonate, potassium octadecylsulfate, sodium laurylsulfonate, or disodium 2-sulfoethyl α-sulfostearate. Preferably, the surface active agent is a fatty acid salt of a metal, where the fatty acid should have at least about 10 carbon atoms, and may have as many as 20 or more carbon atoms. Fatty acids of greater than about 22 carbon atoms are not readily available at a low cost, and thus the fatty acids employed in the invention preferably have about 10 to about 22 carbon atoms. The fatty acid component is preferably a straight-chain fatty acid, however it may also have branching. The fatty acid component is preferably saturated, so as to be minimally reactive with, e.g., oxygen. A preferred fatty acid is stearic acid, which is a linear, C₁₈ fatty acid.

A wide range of metal ions may constitute the metal ion component of the fatty acid salt, where exemplary, non-limiting examples of the metal ions include the ions of sodium, calcium, aluminum, magnesium, potassium and zinc. Sodium, zinc and calcium are preferred counterions.

The molar ratio of fatty acid metal salt to aluminum in the solid solution is preferably not more than about 0.5:1. Preferably, the value of "d" in the formula for the solid solutions of the invention is greater than or equal to 0.05. On a weight basis, when the fatty acid salt is sodium stearate, the salt desirably contributes about 5.5 to about 15 weight percent of the solid solution, based on the total weight of the solid solution. When the level of fatty acid salt falls below the stated range, it is observed that the solid solution does not readily mix with polymers or copolymers, and thus is less effective as a halogen-scavenging compound. When the level of fatty acid salt exceeds the stated range, the solid solution does not have improved performance to offset the increased cost of such a formulation.

A typical infrared spectrum of a solid solution of the invention, having sodium stearate as the metal salt, is shown in Fig. 1. Salient features of the spectrum are set forth below in TABLE 1.

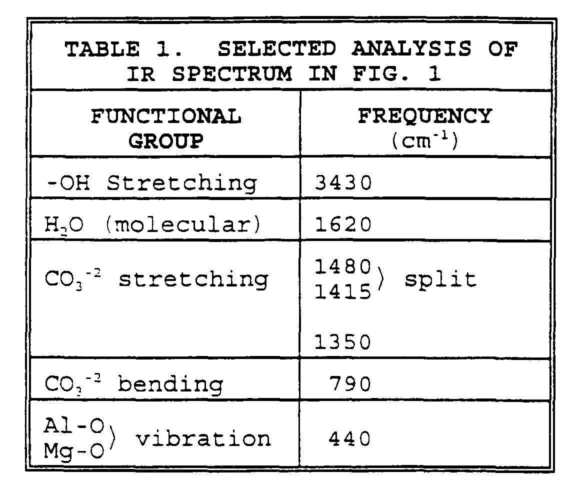

As seen in Fig. 1, the peak observed in the region of 1415-1480 cm⁻¹ is actually split into two peaks. To the best knowledge of the inventors, this feature is unique to solid solutions of the invention, and is indicative of bidentate coordination for the carbonate ions.

The solid solutions of the invention have a crystallite size in the <003> direction, as measured by x-ray diffraction, of about 190 Å to about 225 Å. This is considerably smaller than typical synthetic hydrotalcite-analogues, and is analogous to that found in naturally formed hydrotalcite. Control of the crystallite size in the <003> direction may be achieved by careful control of the manufacturing process, and in particular the conditions of a hydrothermal treatment, as illustrated, for example, in the Examples contained herein.

An X-ray diffraction analysis of a typical solid solution according to the invention is shown in TABLE 2. The X-ray diffraction data indicate that the solid solutions of the invention are distinct from the solid solutions disclosed in, e.g., U.S. 4,539,195, the entire disclosure of which is incorporated herein by reference.

**TABLE 2.**

| **X-RAY DIFFRACTION ANALYSIS** | | | |
|---|---|---|---|
| **INTERPLANAR SPACING (Å)** | **RELATIVE INTENSITY** | **INTERPLANAR SPACING (Å)** | **RELATIVE INTENSITY** |
| 8.4 | 7 | 2.27 | 7 |
| 7.6 | 100 | 2.15 | 7 |
| 6.3 | 3 | 1.93 | 53 |
| 5.75 | 7 | 1.714 | 10 |
| 4.45 | 2 | 1.619 | 8 |
| 4.18 | 7 | 1.519 | 24 |
| 3.76 | 56 | 1.488 | 22 |
| 2.89 | 10 | 1.450 | 5 |
| 2.84 | 3 | 1.409 | 5 |
| 2.8 | 5 | 1.378 | 2 |
| 2.56 | 61 | 1.306 | 3 |
| 2.52 | 8 | 1.263 | 7 |
| 2.35 | 7 | 1.247 | 5 |

The solid solutions of the invention preferably have a tap density of about 0.1 g/cc to about 0.3 g/cc, and more preferably about 0.15 g/cc to about 0.2 g/cc. Tap density may be measured by accurately transferring approximately 10 g of sample into a 250 mL flat-bottomed graduated cylinder, then placing the cylinder in an automatic tapper for one cycle (30 seconds, 1 second drop, 1 second lift, 1 inch drop). The mass of the sample, divided by the volume in the cylinder after one cycle, is the tap density (g/cc).

The solid solutions of the invention preferably have a BET specific surface area of about 25 m²/g to about 40 m²/g. Again, control of the BET surface area may be achieved by careful control of the manufacturing conditions used to make the solid solution, and in particular by carefully controlling the conditions of a hydrothermal treatment step, as illustrated in the Examples set forth below. It is generally observed that precipitation of the solid solution will lead to very high BET specific surface areas, frequently in excess of 100 m²/g. As the temperature and time of a hydrothermal treatment is increased, it is generally observed that a lower BET specific surface area is achieved.

Thermal analysis was performed on a typical solid solution of the invention. The results are shown in TABLE 3.

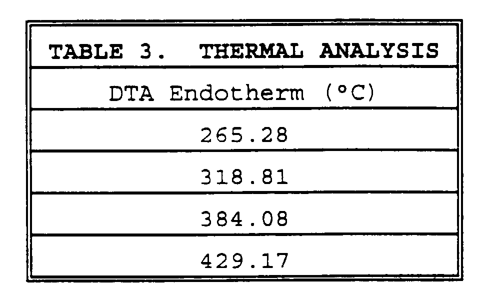

The endothermic peak due to elimination of the interlayer of water is observed at 265.28°C, where loss of moisture and carbonate occur. This indicates that there is a high binding force between anions and the basic layer in the solid solution. The second important endotherm occurs at 384.08°C. At this temperature, loss of water of crystallization and carbon dioxide evolution is believed to occur. The final endotherm at 429.17°C is due to decomposition of brucite-like layers in the solid solution.

Another aspect of the invention is a solid solution formed by a process comprising the steps: (a) heating an aqueous slurry comprising an aluminum compound such as basic aluminum carbonate gel and/or aluminum hydroxide, and a magnesium compound such as basic hydrated magnesium carbonate and/or magnesium oxide, wherein the molar ratio of magnesium to aluminum is about 1.5 to 2.75, to a temperature of about 70 °C to about 95 °C for as long as necessary to remove all free or loosely bound carbon dioxide, which is typically at least about 1 hour, to form a first slurry; and (b) adding at least one surface active agent to said first slurry, to provide a second slurry; and (c) heating said second slurry to a temperature of about 125 °C to about 140 °C for a time sufficient for a suspension test (described below) to be passed. wherein carbonate ion is present from at least one of the basic aluminum carbonate gel, the basic hydrated magnesium carbonate, and a stream of carbon dioxide gas is passed through the second slurry sufficient to yield in the solid solution an aluminum to carbonate ion molar ratio of 2:3 to 2:1.2.

The aluminum hydroxide employed is preferably an active aluminum hydroxide, particularly a finely particulate, amorphous aluminum hydroxide gel which quickly dissolves in diluted acid. Such an aluminum hydroxide can be produced, for example, by precipitation from aluminum salt solutions by means of bases, particularly alkali carbonates. The magnesium compounds employed in the process of the present invention should likewise be present in their active form. Dead-burnt MgO, for example, is entirely unsuitable. The production of active magnesium oxides (hydratable) and basic magnesium carbonates is known. The basic aluminum carbonate preferably has an Al₂O₃ content of about 2% to about 20%, and the magnesium compound is preferably a basic hydrated magnesium carbonate having a MgO content of about 40% to about 43.5%.

The aqueous slurry should be heated for a time and temperature sufficient to liberate most if not all of the free or loosely bound carbon dioxide from the aqueous slurry. This point can be determined based on the procedure provided in the General Procedures section, below. Typically, this can be accomplished by heating for at least one hour, preferably about 1.5 to about 2.5 hours, at a temperature of about 70 °C to about 95 °C, preferably about 85 °C to about 90 °C.

The second slurry, which contains a surface active agent, should be heated for a time and temperature such that the solid solution contained therein passes the suspension test. The suspension test is described in the General Procedures section, below. Typically, this can be accomplished by heating for about 1.5 to about 4 hours, preferably for about 1.5 to about 2 hours, at a temperature of about 125 °C to about 140 °C, preferably about 130 °C to about 135 °C.

In one embodiment of the invention, magnesium oxide can be used as the magnesium compound, and aluminum hydroxide is the aluminum compound. In this instance, carbonate ion must be provided to the reaction mixture, and this can be accomplished by passing a stream of carbon dioxide gas through the second slurry at a rate sufficient to produce the solid solution.

If the solid solution is made free of surface active agent, then it will never pass the suspension test. In this case, a hydrothermal treatment should be conducted for about 1 to about 4 hours, at a temperature of about 125 °C to about 140 °C.

Another aspect of the invention is a method for inhibiting the corrosion-causing tendency of halogen-containing olefin polymers or copolymers. The method comprises incorporating about 0.01% to about 1% of the solid solution of the invention into an olefin polymer or copolymer composition.

The solid solution may be compounded with synthetic resins containing halogens and/or acidic substances derived from, for example, catalysts, monomers and post-treating agents. Examples of such synthetic resins include synthetic resins produced by using halogen-containing Ziegler-type catalysts, such as low-density to high-density polyethylenes, polypropylene, polybutene-1, poly(4-methylpentene-1), ethylene/propylene copolymer, ethylene/propylene/polyene copolymers, ethylene/butene-1 copolymer, polybutadiene rubber and polyisoprene rubber.

Further exemplary synthetic resins, which may be produced using halogen-containing Friedel-Crafts catalysts, include, without limitation, polybutene, polyacetal, butyl rubber, liquid polyisobutylene, petroleum resins and polybenzil. Synthetic resins produced using acidic substances such as sulfuric acid, phosphoric acid and hydrochloric acid as catalysts, may also be employed, and include such resins as diallyl phthalate resin, phenolic resins, xylene resin and silicone resins.

Synthetic resins derived from monomers containing halogens and/or acidic substances may also benefit from compounding with a solid solution of the invention. Exemplary polymers polyvinyl chloride, copolymers of vinyl chloride with at least one comonomer selected from olefinic monomers such as ethylene and propylene, vinylidene halide monomers such as vinylidene chloride and vinylidene fluoride, vinyl acetate, vinyl ether monomers such as lauryl vinyl ether, maleic anhydride, maleic acid esters such as butyl maleate, butadiene and styrene, polyvinylidene chloride, vinylidene chloride copolymers, polyvinyl acetate, vinyl acetate copolymers, polyorganosiloxanes, acrylic or methacrylic polymers or copolymers, epoxy chloroprenne rubber, fluorine rubber, polycarbonate resins, polyesters such as polyethylene terephthalate or polybutylene terephthalate, and polyurethane resins.

The polymers and copolymers may be post-halogenated synthetic resins such as post-chlorinated olefinic resins (e.g., chlorinated polyethylene) post-chlorinated vinyl chloride-type resins (e.g. chlorinated polyvinyl chloride), post-chlorosulfonated olefinic resins (e.g. chlorosulfcnated polyethylene) and post-halogenated rubbers such (e.g., chlorinated or brominated butyl rubber); synthetic resins subjected to post-treatments (such as washing with acids), such as sulfuric acid, phosphoric acid or hydrochloric acid, or neutralization, for example ABS resin and polystyrene resin; synthetic resins containing halogen-containing fire retardants or flame retardants such as tetrabromobisphenol A, decarbromodiphenyl oxide, or chlorinated paraffin; synthetic resins containing halogen-containing coloring agents or phenolic antioxidants such as isoindolinone or phthalocyanine green.

There is no particular restriction on the means of blending the synthetic resin with the hydrotalcite solid solution of the invention. For example, the synthetic resin and solid solution may be mixed as uniformly as possible with or without resin additives by the same means as conventionally used to mix resins with, for example, stabilizers fillers. Mixing may be carried out by using known mixing devices such as a ribbon blender, a high-speed mixer, a kneader, a pelletizer or an extruder. Alternatively, it is possible to use a method by which a suspension of the solid solution is added to a resin slurry immediately after polymerization, and the mixture is stirred and then dried.

The following examples are set forth as a means of illustrating the present invention and are not to be construed as a limitation thereon.

### General Procedures

### Loose or Free Carbon Dioxide Determination

According to the method, a sample is placed under vacuum such that free or loosely absorbed carbon dioxide is removed from the sample and captured in a bed of ascarite. The weight gain of the ascarite is proportional to the carbon dioxide level in the sample.

Procedure: A single-necked flask is fitted with an adapter, which is connected through tubing to a bubbler containing conc. sulfuric acid. The bubbler exit is connected with tubing to a series of three, glass u-tubes which are connected in tandem by tubing. The u-tubes have stopcocks at each end, which allow control of the gas flow through the u-tubes. The last u-tube is connected to a vacuum source. The u-tube closest to the bubbler is filled with magnesium perchlorate (Mg(ClO₃)₂) , the middle u-tube contains a plug of ascarite (mesh size 8-20) followed by a plug of magnesium perchlorate, and the third u-tube (closest to the vacuum source) contains a plug of magnesium chlorate followed by a plug of ascarite (20-30 mesh size).

Pinch clamps are placed on the pieces of tubing which flank the middle u-tube. Both stopcocks of the middle u-tube are closed, then the middle u-tube is disconnected from the tubing and weighed. The middle u-tube is replaced and the pinch clamps removed. All stopcocks are opened.

About 1 to 2 grams of sample are accurately weighed into the single-necked flask. Then a slight vacuum is applied until about 3 bubbles/second come through the bubbler. The flask containing the sample is heated for about 10 minutes, then the heat is removed and the flask allowed to cool under vacuum for about 15 minutes. The vacuum is discontinued and the middle u-tube is reweighed as before. If the weight gain is not more than about 0.6 g, then substantially all of the free or loosely bound carbon dioxide has been removed from the solid solution.

### Suspension Test

Combine 100 mL deionized water and about 0.5-0.6 g of solid solution, as a dry powder, into a 150 mL beaker. Add a magnetic bar and stir the suspension vigorously for five minutes. Allow the suspension to stand for five minutes. The absence of any settling of the powder indicates that additional thermal treatment is not necessary.

In the Examples, average particle size was determined using a Microtrac SRA 50 particle measurement system from Leeds & Northrop Co., Palm Harbor, FL. BET surface area was measured using a Monosorb surface area analyzer from Quanta Chrome Corporation, Syosset, NY.

Homogenization of the slurry was done using a Manton-Gaulin Homogenizer Model 15M from Gaulin Corporation, Everett MA, operated at 5000 psi. Homogenization pressures of about 3000 psi to about 8000 psi were found to be satisfactory, and a preferred pressure was about 5000-6000 psi.

### PREPARATIVE EXAMPLES

### Example 1

A slurry was prepared by blending 346 g basic aluminum carbonate gel (12.9% Al₂O₃, LIQUIGEL HO, Reheis Inc., Berkeley Heights, NJ), 186 g USP grade heavy MgCO₃ powder (Whittaker, Clark & Daniels, South Plainfield, NJ) and 649 g water. The slurry was maintained at 85°C for 0.5 hour; then maintained at 70°C for 1 hour. To the slurry was added 18.5 g sodium stearate (Sodium Stearate EA, Food Grade, Witco Corporation, Oakland, NJ). The slurry was transferred to a Parr bomb (Series 4500 Pressure Reactor, Parr Instrument Company, Moline, IL), where it was heated at 145°C for 4 hours. The resulting slurry was processed through a spray dryer (Bowen Engineering Inc., Bridgewater, NJ) at an outlet temperature of 75°C to produce a fine, white powder which was then micronized in an air mill to an average particle size of 1.4 microns.

The product was analyzed to have 14.9% Al₂O₃, 29.8% MgO, 16.4% CO₂, and 7.04% sodium stearate for a formula of

Al_{2.0} (Mg)_{5.1} (OH)_{11.1} (CO₃)_{2.55}(Na Stearate)_{0.16}·6.69 (H₂O).

The powder had a BET surface area of 25.0 m²/g, a tap density of 0.16 g/cc, and a Al/CO₃ molar ratio of 0.78.

### Example 2

Following the procedure of Example 1, a slurry was prepared blending 326 g of basic aluminum carbonate gel (13.8% Al₂O₃), 186 g USP grade heavy MgCO₃ powder and 669 g water. The resultant slurry was maintained at 85°C for 0.5 hour; then maintained at 70°C for 1 hour. To the slurry was added 18.5 g sodium stearate. The slurry was transferred to a Parr bomb, where it was heated at 130°C for 4 hours.

The product was removed from the Parr bomb and homogenized to break down any agglomerates formed during the processing step into fine submicron- and micron-size particles. It may be noted that the primary precipitated particle is in the submicron range, and these particles agglomerate during the processing steps. The homogenized sample was then processed through a spray dryer at an outlet temperature of 75°C to produce a fine, white powder which was then micronized in an air mill to an average particle size of 1.4 microns.

The product was analyzed to have 14.1% Al₂O₃, 29.4% MgO and 16.4% CO₂. The powder had a BET surface area of 24.8 m²/g and a tap density of 0.24 g/cc.

### Example 3

Following the procedure of Example 1, a slurry was prepared by blending 326 g basic aluminum carbonate gel (13.8% Al₂O₃), 186 g USP grade heavy MgCO₃ powder and 669 g water. The resultant slurry was maintained at 85°C for 0.5 hour; then maintained at 70°C for 1 hour. To the slurry was added 18.5 g sodium stearate, and the mixture was homogenized to break down any agglomerates formed during the prior processing steps, into fine submicron- and micron-size particles. The slurry was then transferred to a Parr bomb and heated at 130°C for 4 hours. The resulting slurry was processed through a spray dryer at an outlet temperature of 75°C to produce a fine, white powder which was then micronized in an air mill to an average particle size of 1.7 microns.

The product was analyzed to have 17.0% Al₂O₃, 30.0% MgO and 11.5% CO₂. The powder had a BET surface area of 23.1 m²/g, a tap density of 0.17 g/cc, and a crystallite size according to x-ray diffraction in the <003> direction of 225 Å.

### Example 4

Following the procedure of Example 1, a slurry was prepared by blending 348 g basic aluminum carbonate gel (12.9% Al₂O₃), 186 g USP grade heavy MgCO₃ powder and 649 g water. The resultant slurry was maintained at 85°C for 0.5 hour; then maintained at 70°C for 1 hour. To the slurry was added 18.5 g of sodium stearate. The slurry was transferred to a Parr bomb and heated at 130°C for 4 hours. The resulting slurry was processed through a spray dryer at an outlet temperature of 75°C to produce a fine, white powder which was then micronized in an air mill to an average particle size of 2.9 microns.

The product was analyzed to have 14.4% Al₂O₃, 29.3% MgO, 18% CO₂ and 5.39% sodium stearate for a formula of

Al_{2.0} (Mg)_{5.21}(OH)_{10.57}(CO₃)_{2.93} (Na stearate)_{0.13}·7.86H₂O.

The powder had a BET surface area of 27.2 m²/g, and a tap density of 0.23 g/cc. The ratio of Al to CO₃ was 0.68.

### Example 5

Following the procedure of Example 1, a slurry was prepared by blending 344 g basic aluminum carbonate gel, 186 g USP grade heavy MgCO₃ powder and 649 g water. The resultant slurry was maintained at 85°C for 0.5 hour; then maintained at 70°C for 1 hour. To the slurry was added 18.5 g of sodium stearate. The slurry was transferred to a Parr bomb and heated at 130°C for 4 hours. The resulting slurry was processed through a spray dryer at an outlet temperature of 75°C to produce a fine, white powder which was then micronized in an air mill to an average particle size of 2.1 microns.

The product was analyzed to have 13.6% Al₂O₃ and 30.4% MgO. The powder had a BET surface area of 24.1 m²/g and a tap density of 0.19 g/cc.

### Example 6

Following the procedure of Example 1, a slurry was prepared by blending 360 lbs basic aluminum carbonate gel (9.0% Al₂O₃, LIQUIGEL NA, Reheis, Inc., Berkeley Heights, NJ), 108 lbs USP grade heavy MgCO₃ powder and 600 lbs water in a pilot plant facility having a glass-lined reactor. The resultant slurry was maintained at 80-85°C for 2.5 hours. To the slurry was added 14 lbs of zinc stearate, and then the slurry was heated at 135°C for 1.5 hours. The resulting slurry was processed through a spray dryer at an inlet temperature 135-163°C and outlet temperature of 70-75°C to produce a fine, white powder which was then micronized in an air mill to an average particle size of 3.2 microns.

The product was analyzed to have 16.7% Al₂O₃, 29.0% MgO, 10.0% CO₂, and 9.67% zinc stearate for a formula of

Al_{2.0}(Mg)_{4.36}(OH)_{11.94}(CO₃)_{1.39}(Zn Stearate)_{0.09}·5.76H₂O.

The powder had a BET surface area of 29.7 m²/g and, according to x-ray diffraction, a crystallite size in the <003> direction of 205 Å. The powder had a tap density of 0.21 g/cc.

### Example 7

Following the procedure of Example 1, a slurry was prepared by blending 242 lbs basic aluminum carbonate gel (9% Al₂O₃), 72 lbs USP grade heavy MgCO₃ powder and 450 lbs water. The resultant slurry was maintained at 80-85°C for 1.5 hours, then 11.3 lbs calcium stearate was added followed by additional heating at 132°C for 1.5 hours. The resulting slurry was processed through a spray dryer at an outlet temperature of 70-75°C to produce a fine, white powder which was then micronized in an air mill to an average particle size of 3.6 microns.

The product was analyzed to have 17% Al₂O₃, 30.3% MgO, 11.8.% CO₂, and 8.72% calcium stearate for a formula of

Al_{2.0}(Mg)_{4.54}(OH)_{11.82}(CO₃)_{1.64}(Ca Stearate)_{0.085}·5.03H₂O.

The powder had a BET surface area of 29.7 m²/g and, according to x-ray diffraction, a crystallite size in the <003> direction of 201 Å. The powder had a tap density of 0.23 g/cc.

### Example 8

Following the procedure of Example 1, a slurry was prepared by blending 270 lbs basic aluminum carbonate gel (8.86% Al₂O₃), 42.5 lbs basic aluminum carbonate gel (13.4% Al₂O₃), 134 lbs USP grade heavy MgCO₃ powder and 500 lbs water. The resultant slurry was maintained at 80-85°C for 1.5 hours, then 14.3 lbs sodium stearate were added followed by heating at 135°C for 1.5 hours. The resulting slurry was processed through a spray dryer at an outlet temperature of 55-60°C to produce a fine, white powder which was then micronized in an air mill to an average particle size of 2.6 microns.

The product was analyzed to have 17.8% Al₂O₃, 30.2% MgO, 10.9% CO₂, and 7.4% sodium stearate for a formula of

Al_{2.0}(Mg)_{4.29}(OH)_{11.7}(CO₃)_{1.43}(Na Stearate)_{0.14}·4.91H₂O.

The powder had a BET specific surface area of 30.5 m²/g and, according to x-ray diffraction, a crystallite size in the <003> direction of 190 Å. The powder had a tap density of 0.12 g/cc.

### PERFORMANCE EXAMPLES

### Example 9 and Comparative Example 1

A masterbatch containing 1% additive package and 99% HDPE (unstabilized reactor high density polyethylene, product 8412, Chevron Chemical, Orange, TX) was prepared by dry blending. The chloride concentration of the HDPE was determined to be 360 ppm (one determination). The additives were 1000 ppm of a primary antioxidant (Irganox 1010, Batch No. 391204, Ciba-Geigy, Sufforn, NY), 500 ppm of a secondary antioxidant (Irgafos 168, Batch No. AVA 382001, Ciba-Geigy), and 300 ppm of solid solution prepared according to Example 8. The masterbatch was extruded and formed into discs as described below, to prepare Sample No. 9.

A comparison composition was prepared as follows. The composition of Example 9 was duplicated, with the exception that DHT-4A (a hydrotalcite from Kyowa Chemical Industry Co., Ltd., Tokyo, Japan) was substituted for the solid solution of Example 8. The masterbatch was extruded and formed into discs as described below, to prepare Sample No. C1.

Extrusion Conditions: Sample Nos. 9 and Cl were first extruded through a Leistritz 34 mm co-rotating, intermeshing twin-screw 10-zone extruder, with an L/D of 40. Two volumetric feeders were used to feed the materials at about 20 lb/hr. The ratio of feed rates of each feeder was adjusted so that the additives were fed at the prescribed concentrations. Before starting, the extruder was purged with purging compound, followed by polypropylene and then 12 lb of each polymer-based formulation. Vacuum was not used. Each material was extruded through a strand die and quenched in cold water. High velocity air was used to blow off water from the extruder strand, after which it was pelletized in a Killion Pelletizer.

Each of the two formulations was then extruded four additional times in a Killion 1" single screw 5-zone extruder, with an L/D of 20 and a general purpose screw. Between each run about 1 lb. of formulated material was used to purge the machine. The extruded material was quenched and pelletized as described above.

TABLE A reports the extrusion conditions for each of the five runs.

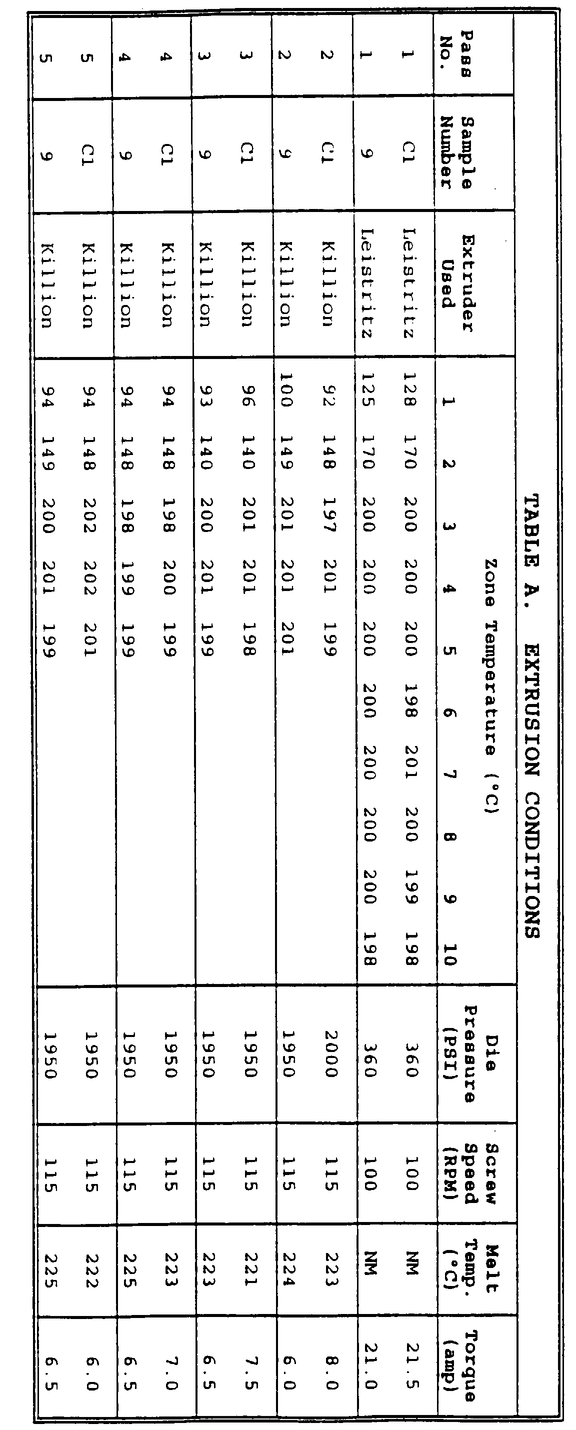

Sample Preparation: Discs, 1/8" thick and 3.1" in diameter, were prepared from the extruded material by compression molding. The HDPE samples were prepared at 175°C as follows: 1 min preheating pellets, 2 min melting at 1000 lbs, 3 min cooling at 5000 lbs.

Testing: Color data for the discs prepared above was obtained using the combination of a Macbeth Color Eye® spectrophotometer Model M2090 PL and an IBM personal computer. Color measurement was done in a reflectance mode. From reflectance data, the tristimulus values were computed to generate yellow-blue ("Blue" in TABLE B) and red-green ("Green" in TABLE B) indices. Oven-aging conditions were 110°C for 22 hrs. The color data appears in TABLE B.

**TABLE B.**

| **Color Data** | | | | |
|---|---|---|---|---|
| Pass No. | Sample No. | Blue | Green | Halogen-scavenger |
| 1 | C1 | 5.37 | 7.21 | DHT-4A |
| 1 | 9 | 5.78 | 7.66 | Ex. No. 8 |
| 1 | C1 (Aged) | 5.10 | 7.15 | DHT-4A |
| 1 | 9 (Aged) | 5.64 | 7.66 | Ex. No. 8 |
| 3 | C1 | 4.47 | 6.45 | DHT-4A |
| 3 | 9 | 5.38 | 7.36 | Ex. No. 8 |
| 5 | C1 | 3.96 | 6.06 | DHT-4A |
| 5 | 9 | 5.95 | 7.18 | Ex. No. 8 |

The data in Table B indicates that the solid solution from Example No. 8 is a superior halogen-scavenger: the color of Sample No. 9 was more consistent throughout five extrusion passes, and was slightly whiter in color than Sample No. C1.

Yellowness Index: Yellowness index (ASTM D-1925) was also measured on discs molded after one, three, and five passes, and oven-aged discs produced after one pass. Oven-aging conditions were 110°C for 22 hrs. Average results for two discs are shown in TABLE C. Two measurements per each side of each of the discs were made. The results indicate that, in HDPE, the solid solution prepared in Example No. 8 yields a less yellow polymer composition, after 5 passes through an extruder, than is achieved using DHT-4A under the same conditions.

**TABLE C.**

| **YELLOWNESS INDEX OF HDPE FORMULATIONS** | | | | | |
|---|---|---|---|---|---|
| **Pass No.** | **Sample No.** | **Color Index** | **Pass No.** | **Sample No.** | **Color Index** |
| 1 | 9 | 9.20 | 1 | C1 | 8.73 |
| 1 | 9 (Aged) | 9.94 | 1 | C1 (Aged) | 9.71 |
| 3 | 9 | 10.7 | 3 | C1 | 12.1 |
| 5 | 9 | 11.7 | 5 | C1 | 13.4 |

### Example 10 and Comparative Example 2

A masterbatch containing 1% additive package and 99% unstabilized polypropylene (PP) (Fortilene PP 9600, Solvay, Deer Park, TX) was prepared by dry blending. The additives were 1000 ppm of a primary antioxidant (Irganox 1010, Ciba-Geigy, Batch #391204), 500 ppm of a secondary antioxidant (Sandostab P-EPQ), and 300 ppm of solid solution prepared according to Example 8.

The masterbatch was initially extruded through a W&P ZSK30 co-rotating intermeshing twin screw extruder with an L/D of 40. The extrudate was then extruded four times through a Killion 1" single-screw extruder with an L/D of 20. Discs, denoted Sample No. 10, and each having a 0.077 inch thickness, were prepared by compression molding at 195 °C as follows: 2 min. pre-heating of pellets, 2 min. melting at 5,000 lbs, and 3 min. cooling at 5,000 lbs.

To prepare Comparative Example 2, the composition of Example 10 was duplicated, with the exception that DHT-4A was substituted for the solid solution of Example 8. The masterbatch was extruded, and discs prepared, as described above, to prepare Sample No. C2.

The Yellowness Index according to ASTM D-1925 was determined for Samples Nos. 10 and C2 as shown in TABLE D. Results indicate superior performance for Sample No. 10.

**TABLE D.**

| **YELLOWNESS INDEX OF PP FORMULATIONS** | | | | | |
|---|---|---|---|---|---|
| **Pass No.** | **Sample No.** | **Color Index** | **Pass No.** | **Sample No.** | **Color Index** |
| 1 | 10 | 6.4 | 1 | C2 | 8.2 |
| 1 | 10 (Aged) | 6.2 | 1 | C2 (Aged) | 6.5 |
| 3 | 10 | 11.2 | 3 | C2 | 14.5 |
| 5 | 10 | 130.0 | 5 | C2 | 16.1 |

### Example 11: Corrosion Test

The corrosion inhibition performance of the halogen scavenger of the invention was measured using the following procedure. Compounded formulations of minimally stabilized polymer and halogen scavenger, as set forth in Table F, were placed between polished (15 cm x 10 cm) steel plates. Three weighted plates, total weight 350 g, were placed on the sample test plates and the assembly was placed in a circulating air oven at 250°C, where it was heated for thirty minutes. The assembly was removed and, being careful not to touch the test surface of the test plate, it was stripped away from the resin sample. The test plate was allowed to stand in a humidity saturated chamber at 25°C for 12 hours. No part of the test plate actually touched water while in the humidity chamber.

The corrosivity of the polymer was classified as none, slight, medium, high, or very high according to the appearances set forth in TABLE E.

**TABLE E**

| **Corrosivity Classification** | **Plate Appearance** |
|---|---|
| None | Glossy surface or no rust removed when wiped with a clean white paper towel. |
| Slight | Some small rust spots or slight streaking. The rust may be apparent only when wiped with a clean white towel. (The rust will appear very lightly on the towel.) |
| Medium | One or more clear rust spots. (These spots are clearly visible and wiping is not necessary.) |
| High | All of the surface is covered with clear rust spots. |
| Very High | The rust is present over essentially the entire test area of the test plate. |

In TABLE F, "Ex. No. 6" refers to the solid solution prepared according to the procedure provided in Example No. 6, above. "Ex. No. 8" and "Ex. No. 3" have the corresponding meanings.

**TABLE F.**

| **CORROSION TEST RESULTS** | | | |
|---|---|---|---|
| **Polymer Tested** | **Halogen scavenger Tested** | **Concentration ppm** | **Corrosion Test Results** |
| Virgin linear | None | 0 | High |
| low density | Ex. No. 6 | 500 | None |
| Lot #ER 3003Z | Ex. No. 8 | 500 | Slight |
| (Chevron) | Ex. No. 3 | 500 | Slight |
| Polypropylene | None | 0 | Medium |
| Fortilene | Ex. No. 6 | 500 | None |
| Lot# 9600 | Ex. No. 8 | 500 | None |
| (Solvay) | Ex. No. 3 | 500 | None |

The data in TABLE F shows that each of the halogen scavengers tested was able to mitigate the corrosion properties of the two polymers tested.

## Claims

1. A solid solution having the formula
Al₂(Mg)ₐ(OH)_{b}(CO₃)_{c}(G)_{d}·eH₂O and a crystallite size in the <003> direction of about 190 Å to about 225 Å, and having bidentate coordination for carbonate ion as shown by an infrared spectrum, and wherein 3 ≤ a ≤ 5.5; 8 ≤ b ≤ 14; 1.2 ≤ c ≤ 3; 0 ≤ d ≤ 1;1 ≤ e ≤ 10 and G is a surface active agent.

2. A solid solution according to claim 1, wherein G is a metal salt of a C₁₀-C₂₂ saturated fatty acid.

3. A solid solution according to claim 2, wherein said metal salt of a C₁₀-C₂₂ saturated fatty acid is selected from the group consisting of the sodium stearate, zinc stearate and calcium stearate.

4. A solid solution according to claim 1 having an infrared spectrum that displays a split absorption band in the region of 1415-1480 cm⁻¹.

5. A solid solution according to claim 1 having a tap density of about 0.1 g/cc to about 0.3 g/cc.

6. A solid solution according to claim 1 having a BET specific surface area of about 25 m²/g to about 40 m²/g.

7. A solid solution according to claim 1 wherein 4.1 ≤ a ≤ 5.3; 10 ≤ b ≤ 12; 1.3 ≤ c ≤ 3; 0 ≤ d ≤ 0.5; 3 ≤ e ≤ 9.

8. A method for inhibiting the corrosion-causing tendency and coloration of halogen-containing olefin polymers or copolymers, comprising incorporating about 0.01% to about 1% of the solid solution of claim 1 into an olefin polymer or copolymer.

9. A solid solution formed by a process comprising the steps:
(a) heating an aqueous slurry comprising an aluminum compound selected from the group consisting of basic aluminum carbonate gel and aluminum hydroxide, and a magnesium compound selected from the group consisting of basic hydrated magnesium carbonate and magnesium oxide, wherein the molar ratio of magnesium to aluminum is about 1.5 to 2.75, to a temperature of about 70 °C to about 95 °C and for a reaction time "X" to provide a first slurry, where "X" is a period of time sufficient to achieve removal of substantially all free and loosely bound carbon dioxide from the aqueous slurry;
(b) adding at least one surface active agent to said first slurry, to provide a second slurry;
(c) heating said second slurry to a temperature of about 125 °C to about 140 °C for a time sufficient for a suspension test to be passed, where the suspension test takes an aliquot of said second slurry, removes the water therefrom to provide about 0.5 to about 0.6 g of dry solid solution in powdered form, combines the dry solid solution with about 100 mL deionized water to provide a suspension, and stirs the suspension vigorously for about five minutes, where the failure of the suspension to exhibit appreciable settling after stirring is completed indicates that the suspension test has been passed; wherein carbonate ion is present from at least one of the basic aluminum carbonate gel, the basic hydrated magnesium carbonate, and a stream of carbon dioxide gas passed through the second slurry, sufficient to yield in the solid solution an aluminum to carbonate ion molar ratio of 2:3 to 2:1.2.

10. A solid solution according to claim 9 having an infrared spectrum that displays a split absorption band in the region of 1415-1480 cm⁻¹.

11. A solid solution according to claim 9, having a crystallite size in the <003> direction of about 190 Å to about 225 Å.

12. A solid solution according to claim 9 having a BET specific surface area of about 25 m²/g to about 40 m²/g.

13. A solid solution according to claim 9, wherein magnesium oxide is the magnesium compound, aluminum hydroxide is the aluminum compound, and a stream of carbon dioxide gas is passed through the second slurry at a rate sufficient to produce the solid solution.

14. A solid solution according to claim 9, wherein said surface active agent is a metal salt of a C₁₀-C₂₂ saturated fatty acid.

15. A solid solution according to claim 14, wherein said surface active agent is selected from the group consisting of the sodium stearate, zinc stearate and calcium stearate.

16. A solid solution according to claim 9, wherein the basic aluminum carbonate gel has an Al₂O₃ content of about 2% to about 20% by weight.

17. A solid solution according to claim 9, wherein said magnesium carbonate has a MgO content of about 40% to about 43.5% by weight.

18. A solid solution according to claim 9, wherein said aqueous slurry is heated for at least about 1 hour.

19. A solid solution according to claim 18, wherein said aqueous slurry is heated at a temperature of about 85 °C to about 90 °C for about 1.5 hours to about 2 hours.

20. A solid solution according to claim 9, wherein said second slurry is heated to a temperature of about 130 °C to about 135 °C for about 1.5 hours to about 2 hours.

21. A solid solution according to claim 9, further comprising the step of removing the water from said second slurry to provide a dry solid solution, and then micronizing said dry solid solution to provide particles having a particle size distribution wherein at least 99% of the particles are less than 44 microns in diameter, and at least 95% of the particles are less than 10 microns in diameter.

22. A solid solution according to claim 21, wherein the average particle size of the dry solid solution is about 4 microns to about 5 microns.

23. A solid solution according to claim 21 having a tap density of about 0.1 g/cc to about 0.3 g/cc.

24. A solid solution formed by a process comprising the steps:
(a) heating an aqueous slurry comprising an aluminum compound selected from the group consisting of basic aluminum carbonate gel and aluminum hydroxide, and a magnesium compound selected from the group consisting of basic hydrated magnesium carbonate and magnesium oxide, wherein the molar ratio of magnesium to aluminum is about 1.5 to 2.75, to a temperature of about 70 °C to about 95 °C and for a reaction time "X" to provide a first slurry, where "X" is a period of time sufficient to achieve removal of substantially all free and loosely bound carbon dioxide from the aqueous slurry;
(b) heating said first slurry to a temperature of about 125 °C to about 140 °C for about 1 to about 4 hours; wherein carbonate ion is present from at least one of the basic aluminum carbonate gel, the basic hydrated magnesium carbonate, and a stream of carbon dioxide gas passed through the first slurry, sufficient to yield in the solid solution an aluminum to carbonate molar ratio of 2:3 to 2:1.2.

25. A solid solution according to claim 24, having an IR spectrum which displays a split absorption band in the region of 1415-1480 cm⁻¹.

26. A solid solution according to claim 24, having a crystallite size in the <003> direction of about 190 Å to about 225 Å.

## Patentansprüche

1. Feste Lösung, die die Formel
Al₂(Mg)ₐ(OH)_{b}(CO₃)_{c}(G)_{d} • eH₂O und eine Kristallitgröße in der <003>-Richtung von etwa 190 Å bis etwa 225 Å aufweist und die eine zweizähnige Koordination für das Carbonat-Ion aufweist, wie mittels eines Infrarot-Spektrums gezeigt wurde und in der 3≤a≤5,5; 8≤b≤14; 1,2≤c≤3; 0≤d≤1; 1≤e≤10 und G ein oberflächenaktives Mittel ist.

2. Feste Lösung nach Anspruch 1, wobei G ein Metallsalz einer gesättigten C₁₀-C₂₂-Fettsäure ist.

3. Feste Lösung nach Anspruch 2, wobei das Metallsalz einer gesättigten C₁₀-C₂₂-Fettsäure ausgewählt ist aus der Gruppe bestehend aus Natriumstearat, Zinkstearat und Calciumstearat.

4. Feste Lösung nach Anspruch 1, die ein Infrarotspektrum aufweist, das im Bereich von 1415-1480 cm⁻¹ eine gespaltene Absorptionsbande zeigt.

5. Feste Lösung nach Anspruch 1, die eine Klopfdichte von etwa 0,1 g/cm³ bis etwa 0,3 g/cm³ aufweist.

6. Feste Lösung nach Anspruch 1, die eine spezifische BET-Oberfläche von etwa 25 m²/g bis etwa 40 m²/g aufweist.

7. Feste Lösung nach Anspruch 1, wobei 4, 1≤a≤5,3; 10≤b≤12; 1,3≤c≤3; 0≤d≤0,5; 3≤e≤9.

8. Verfahren, um die Tendenz zum Rosten und zur Verfärbung von halogenhaltigen Olefinpolymeren zu inhibieren, umfassend den Einbau von 0,01% bis etwa 1% der festen Lösung von Anspruch 1 in ein Olefinpolymer oder Copolymer.

9. Feste Lösung, gebildet durch ein Verfahren, umfassend die Schritte:
a) Erhitzen einer wässrigen Aufschlämmung, die eine Aluminiumverbindung, ausgewählt aus der Gruppe bestehend aus basischem Aluminiumcarbonatgel und Aluminiumhydroxid, und einer Magnesiumverbindung, ausgewählt aus der Gruppe bestehend aus basischem hydriertem Magnesiumcarbonat und Magnesiumoxid, umfaßt, wobei das Molverhältnis von Magnesium zu Aluminium etwa 1,5 zu 2,75 beträgt, auf eine Temperatur von etwa 70°C bis etwa 95°C und für eine Reaktionszeit "X", um eine erste Aufschlämmung bereitzustellen, wobei "X" ein Zeitraum ist, der ausreicht, um die Entfernung von im wesentlichen sämtlichem freien und lose gebundenem Kohlendioxid aus der wässrigen Aufschlämmung zu erreichen;
b) Zugeben von mindestens einem oberflächenaktiven Mittel zu der ersten Aufschlämmung, um eine zweite Aufschlämmung bereitzustellen;
c) Erhitzen der zweiten Aufschlämmung auf eine Temperatur von etwa 125°C bis etwa 140°C für einen Zeitraum, der ausreicht, um einen Suspensionstest durchzuführen, wobei für den Suspensionstest ein Aliquot der zweiten Aufschlämmung entnommen wird, das Wasser daraus entfernt wird, um etwa 0,5 bis etwa 0,6 g trockene feste Lösung in pulverisierter Form bereitzustellen, die trockene feste Lösung mit etwa 100 ml entionisiertem Wasser vereinigt wird, um eine Suspension bereitzustellen, und die Suspension etwa 5 Minuten lang kräftig gerührt wird, wobei ein Ausbleiben einer vernünftigen Sedimentierung der Suspension nach Beendigung des Rührens anzeigt, daß der Suspensionsstest bestanden worden ist; wobei das Carbonation aus dem basischen Aluminiumcarbonatgel, dem hydrierten basischen Magnesiumcarbonat und/oder einem Kohlendioxidstrom, der durch die zweite Aufschlämmung durchgeleitet wird, in einer Menge vorliegt, die ausreicht, um in der festen Lösung ein Molverhältnis von Aluminium- zu Carbonat-Ion von 2:3 bis 2:1,2 zu erreichen.

10. Feste Lösung nach Anspruch 9, die ein Infrarotspektrum aufweist, das im Bereich von 1415-1480 cm⁻¹ eine gespaltene Absorptionsbande zeigt.

11. Feste Lösung nach Anspruch 9, die eine Kristallitgröße in der <003>-Richtung von etwa 190 Å bis etwa 225 Å aufweist.

12. Feste Lösung nach Anspruch 9, die eine spezifische BET-Oberfläche von etwa 25 m²/g bis etwa 40 m²/g aufweist.

13. Feste Lösung nach Anspruch 9, wobei Magnesiumoxid die Magnesiumverbindung ist, Aluminiumhydroxid die Aluminiumverbindung ist und ein Kohlendioxidgasstrom durch die zweite Aufschlämmung bei einer Geschwindigkeit durchgeleitet wird, die ausreicht, um die feste Lösung zu erzeugen.

14. Feste Lösung nach Anspruch 9, wobei das oberflächenaktive Mittel ein Metallsalz einer gesättigten C₁₀-C₂₂-Fettsäure ist.

15. Feste Lösung nach Anspruch 14, wobei das oberflächenaktive Mittel ausgewählt ist aus der Gruppe bestehend aus Natriumstearat, Zinkstearat und Calciumstearat.

16. Feste Lösung nach Anspruch 9, wobei das basische Aluminiumcarbonatgel einen Al₂O₃-Gehalt von etwa 2 Gew.-% bis etwa 20 Gew.-% aufweist.

17. Feste Lösung nach Anspruch 9, wobei das Magnesiumcarbonat einen MgO-Gehalt von etwa 40 Gew.-% bis etwa 43,5 Gew.-% aufweist.

18. Feste Lösung nach Anspruch 9, wobei die wässrige Aufschlämmung mindestens eine Stunde lang erhitzt wird.

19. Feste Lösung nach Anspruch 18, wobei die wässrige Aufschlämmung auf eine Temperatur von etwa 85°C bis etwa 90°C etwa 1,5 Stunden bis etwa 2 Stunden lang erhitzt wird.

20. Feste Lösung nach Anspruch 9, wobei die zweite Aufschlämmung etwa 1,5 Stunden bis etwa 2 Stunden lang auf eine Temperatur von etwa 130°C bis etwa 135°C erhitzt wird.

21. Feste Lösung nach Anspruch 9, die darüber hinaus den Schritt umfaßt, daß das Wasser aus der zweiten Aufschlämmung entfernt wird, um eine trockene feste Lösung zu bilden und dann die trockene feste Lösung mikronisiert wird, um Partikel bereitzustellen, die eine Partikelgrößenverteilung aufweisen, bei der mindestens 99% der Partikel einen Durchmesser von weniger als 44 Micron aufweisen und mindestens 95% der Partikel einen Durchmesser von weniger als 10 Micron aufweisen.

22. Feste Lösung nach Anspruch 21, wobei die durchschnittliche Partikelgröße der festen Lösung etwa 4 Micron bis etwa 5 Micron beträgt.

23. Feste Lösung nach Anspruch 21, die eine Klopfdichte von etwa 0,1 g/cm³ bis etwa 0,3 g/cm³ aufweist.

24. Feste Lösung, hergestellt durch ein Verfahren, das die Schritte umfasst:
a) Erhitzen einer wässrigen Aufschlämmung, die eine Aluminiumverbindung, ausgewählt aus der Gruppe bestehend aus basischem Aluminiumcarbonatgel und Aluminiumhydroxid, und eine Magnesiumverbindung, ausgewählt aus der Gruppe bestehend aus hydratisiertem basischen Magnesiumcarbonat und Magnesiumoxid umfaßt, wobei das Molverhältnis von Magnesium zu Aluminium etwa 1,5 zu 2,75 beträgt, auf eine Temperatur von etwa 70°C bis etwa 95°C und für eine Reaktionszeit "X", um eine erste Aufschlämmung bereitzustellen, wobei "X" eine Zeitspanne ist, die ausreicht, um im wesentlichen sämtliches freie und lose gebundene Kohlendioxid aus der wässrigen Aufschlämmung zu entfernen;
b) Erhitzen der ersten Aufschlämmung auf eine Temperatur von etwa 125°C bis etwa 140°C für etwa 1 bis etwa 4 Stunden, wobei das Carbonation aus dem basischen Aluminiumcarbonatgel, dem hydratisierten basischen Magnesiumcarbonat und/oder einem Kohlendioxidgasstrom, der durch die erste Aufschlämmung geleitet wird, herrührt, der ausreicht, um in der festen Lösung ein Molverhältnis von Aluminium zu Carbonat von 2:3 bis 2:1,2 zu erreichen.

25. Feste Lösung nach Anspruch 24, die ein IR-Spektrum aufweist, das in dem Bereich von 1415 bis 1480 cm⁻¹ eine gespaltene Absorptionsbande aufweist.

26. Feste Lösung nach Anspruch 24, die in der <003>-Richtung eine Kristallitgröße von etwa 190 Å bis etwa 225 Å aufweist.

## Revendications

1. Solution solide répondant à la formule Al₂(Mg)ₐ(OH)_{b}(CO₃)_{c}(G)_{d}•eH₂O, ayant une taille de cristallites dans la direction <003> d'environ 190 Å à environ 225 Å, ayant une coordination bidentée pour l'ion carbonate telle que montrée par un spectre des infrarouges, et dans laquelle 3 ≤ a ≤ 5,5 ; a ≤ b ≤ 14 ; 1,2 ≤ c ≤ 3 ; 0 ≤ d ≤ 1 ; 1 ≤ e ≤ 10 et G est un agent tensioactif.

2. Solution solide selon la revendication 1, dans laquelle G est un sel métallique d'un acide gras saturé en C₁₀ à C₂₂.

3. Solution solide selon la revendication 2, dans laquelle ledit sel mtétallique d'un acide gras saturé en C₁₀ à C₂₂ est choisi dans l'ensemble constitué par le stéarate de sodium, le stéarate de zinc et le stéarate de calcium.

4. Solution solide selon la revendication 1, ayant un spectre des infrarouges qui affiche une bande d'absorption divisée dans la région de 1415 à 1480 cm⁻¹.

5. Solution solide selon la revendication 1, ayant une masse volumique après tassement d'environ 0,1 g/cm³ à environ 0,3 g/cm³.

6. Solution solide selon la revendication 1, ayant une aire spécifique BET d'environ 25 m²/g à environ 40 m²/g.

7. Solution solide selon la revendication 1, dans laquelle 4,1 ≤ a ≤ 5,3 ; 10 ≤ b ≤ 12 ; 1,2 ≤ c ≤ 3 ; 0 ≤ d ≤ 0,5 ; 3 ≤ e ≤ 9.

8. Procédé pour inhiber la tendance conduisant à une corrosion et la coloration de polymères ou copolymères oléfiniques halogénés, comprenant l'incorporation d'environ 0,01 % à environ 1 % de la solution solide de la revendication 1 dans un polymère ou copolymère d'oléfine.

9. Solution solide formée par un procédé comprenant les étapes consistant à :
(a) chauffer une bouillie aqueuse comprenant un composé de l'aluminium choisi dans l'ensemble constitué par le gel de carbonate d'aluminium basique et l'hydroxyde d'aluminium, et un composé du magnésium choisi dans l'ensemble constitué par le carbonate de magnésium hydraté basique et l'oxyde de magnésium, dans laquelle le rapport molaire du magnésium à l'aluminium est d'environ 1,5 à 2,75, à une température d'environ 70°C à environ 95°C et pendant un temps de réaction "X" pour réaliser une première bouillie, où "X" est une période de temps suffisante pour obtenir l'élimination dans la bouillie aqueuse de pratiquement tout le dioxyde de carbone libre et lié de façon lâche ;
(b) ajouter au moins un agent tensioactif à ladite première bouillie, pour réaliser une deuxième bouillie ; (c) chauffer ladite deuxième bouillie à une température d'environ 125°C à environ 140°C pendant un temps suffisant pour qu'elle passe un test de suspension, où le test de suspension soutire un aliquote de ladite deuxième bouillie, retire l'eau ce celui-ci pour obtenir d'environ 0,5 à environ 0,6 g de solution solide sèche sous forme pulvérulente, combine la solution solide sèche avec environ 100 ml d'eau déminéralisée pour constituer une suspension, et agite la suspension vigoureusement pendant environ cinq minutes, où l'échec de la suspension, montrant une décantation appréciable une fois que l'agitation est terminée, indique que le test de suspension a été réussi ; dans laquelle l'ion carbonate est présent à partir d'au moins l'un parmi le gel de carbonate d'aluminium basique, le carbonate de magnésium hydraté basique, et un courant de dioxyde de carbone gazeux ayant traversé la deuxième bouillie, de façon suffisante pour donner dans la solution solide un rapport molaire des ions aluminium à carbonate de 2/3 à 2/1,2.

10. Solution solide selon la revendication 9, ayant un spectre des infrarouges qui affiche une bande d'absorption divisée dans la région de 1415 à 1480 cm⁻¹.

11. Solution solide selon la revendication 9, ayant une taille de cristallites dans la direction <003> d'environ 190 Å à environ 225 Å.

12. Solution solide selon la revendication 9, ayant une aire spécifique BET d'environ 25 m²/g à environ 40 m²/g.

13. Solution solide selon la revendication 9, dans laquelle l'oxyde de magnésium est le composé du magnésium, l'hydroxyde d'aluminium est le composé de l'aluminium, et un courant de dioxyde de carbone gazeux traverse la deuxième bouillie à un débit suffisant pour produire la solution solide.

14. Solution solide selon la revendication 9, dans laquelle ledit agent tensioactif est un sel métallique d'un acide gras saturé en C₁₀ à C₂₂.

15. Solution solide selon la revendication 14, dans laquelle ledit agent tensioactif est choisi dans l'ensemble constitué par le stéarate de sodium, le stéarate de zinc et le stéarate de calcium.

16. Solution solide selon la revendication 9, dans laquelle le gel de carbonate d'aluminium basique a une teneur en Al₂O₃ d'environ 2 % à environ 20 % en poids.

17. Solution solide selon la revendication 9, dans laquelle ledit carbonate de magnésium a une teneur en MgO d'environ 40 % à envircn 43,5 % en poids.

18. Solution solide selon la revendication 9, dans laquelle ladite bouillie aqueuse est chauffée pendant au moins environ 1 heure.

19. Solution solide selon la revendication 13, dans laquelle ladite bouillie aqueuse est chauffée à une température d'environ 85°C à environ 90°C pendant une durée d'environ 1,5 heures à environ 2 heures.

20. Solution solide selon la revendication 9, dans laquelle ladite deuxième bouillie est chauffée à une température d'environ 130°C à environ 135°C pendant une durée d'environ 1,5 heures à environ 2 heures.

21. Solution solide selon la revendication 9, comprenant en outre l'étape d'élimination de l'eau dans ladite deuxième bouillie pour réaliser une solution solide sèche, et ensuite la micronisation de ladite solution solide sèche pour constituer des particules ayant une àistribution de granulométrie dans laquelle au moins 99 % des particules ont un diamètre inférieur à 44 µm et au moins 95 % des particules ont un diamètre inférieur à 10 µm.

22. Solution solide selon la revendication 21, dans laquelle la granulométrie moyenne de la solution solide sèche est d'environ 4 µm à environ 5 µm.

23. Solution solide selon la revendication 21, ayant une masse volumique après tassement d'environ 0,1 g/cm³ à environ 0,3 g/cm³.

24. Solution solide formée par un procédé comprenant les étapes consistant à :
(a) chauffer une bouillie aqueuse comprenant un composé de l'aluminium choisi dans l'ensemble constitué par le gel de carbonate d'aluminium basique et l'hydroxyde d'aluminium, et un composé du magnésium choisi dans l'ensemble constitué par le carbonate de magnésium hydraté basique et l'oxyde de magnésium, dans laquelle le rapport molaire du magnésium à l'aluminium est d'environ 1,5 à 2,75, à une température d'environ 70°C à environ 95°C et pendant un temps de réaction "X" pour réaliser une première bouillie, où "X" est une période de temps suffisante pour obtenir l'élimination dans la bouillie aqueuse de pratiquement tout le dioxyde de carbone libre et lié de façon lâche ;
(b) chauffer ladite première bouillie à une température d'environ 125°C à environ 140°C pendant d'environ 1 à environ 4 heures ; dans laquelle l'ion carbonate est présent à partir d'au moins l'un parmi le gel de carbonate d'aluminium basique, le carbonate de magnésium hydraté basique, et un courant de dioxyde de carbone gazeux ayant traversé la deuxième bouillie, de façon suffisante pour donner dans la solution solide un rapport molaire de l'aluminium au carbonate de 2/3 à 2/1,2.

25. Solution solide selon la revendication 24, ayant un spectre IR qui affiche une bande d'absorption divisée dans la région de 1415 à 1480 cm⁻¹.

26. Solution solide selon la revendication 24, ayant une taille de cristallites dans la direction <003> d'environ 190 Å à environ 225 Å.
